# EUROPÄISCHE PATENTSCHRIFT

(11) **EP 0 522 282 B1**
(45) Veröffentlichungstag und Bekanntmachung des Hinweises auf die Patenterteilung: **15.03.2000**
(21) Anmeldenummer: 92109317.5
(22) Anmeldetag: 02.06.1992
(51) Int. Cl.: F16B 7/04, B21C 37/15, B21K 21/16

(54) **Verbindung von Hohlteilen sowie Verfahren zu ihrer Herstellung**
Joint for hollow articles and method for their manufacture
Raccord d'éléments creux et procédé pour leur fabrication

(30) Priorität: 10.07.1991 DE 4122862
(43) Veröffentlichungstag der Anmeldung: 13.01.1993
(73) Patentinhaber: Magna IHV Gesellschaft für Innenhochdruckverfahren MBH, 73441 Bopfingen (DE)
(72) Erfinder: Bögel,Helmut, W-7080 Aalen (DE); Gillé, Mathias c/o Gesenkschmiede Schneider GmbH, D-73431 Aalen (DE)
(74) Vertreter: Kovac, Werner

(56) Entgegenhaltungen:
- DE-A- 3 443 588
- DE-C- 939 847
- DE-C- 3 720 597
- FR-A- 2 404 139
- GB-A- 2 127 328
- US-A- 2 770 874

## Beschreibung

Die Erfindung betrifft Träger in leichten Landfahrzeugen sowie ein Verfahren zu ihrer Herstellung.

Hohlteile, insbesondere Rohre, die tragende Funktionen als Träger in Landfahrzeugen haben, sind in vielen Fällen mit anderen Hohlteilen, insbesondere anderen Rohren, zu verbinden, wobei hier besonders der Fall angesprochen ist, bei dem sich diese Hohlteile überschneiden. Bisher war diese Verbindung schwierig, da die übereinandergelegten Hohlteile sodann im Kreuzungsbereich eine erheblich verdickte "Kreuzung" bildeten,

Dabei wird hier unter Hohlteil im allgemeinen ein hohles Teil verstanden, das eine größere Längs- als Quererstreckung hat und insbesondere auch über seinen Längsverlauf unterschiedliche Querschnitte aufweisen kann oder auch gebogen sein kann.

Aus der US-A-/3 849 013 ist es bekannt, im Schiffsbau metallische Hohlteile durch Warmverformung so umzuformen, daß Vertiefungen ausgebildet sind, die an der Kreuzung der Hohlteile miteinander verbunden sind. Dabei ist es wichtig, daß der Gesamtdurchmesser der Kreuzung gleich dem Außendurchmesser eines Hohlkörpers ist. Derartige Verbindungen sind schwer und genügen nicht den im Bau leichter Landfahrzeuge üblichen Anforderungen an Verformungsverhalten, Präzision bei Massenbauweise und Leichtigkeit.

Die Verwendung von Hohlteilen ist im Interesse der Gewichtsersparnis von ständig wachsender Bedeutung, sodaß es ein Problem ist, Hohlteile bspw. zu kreuzen, ohne daß eine erhebliche Schwächung der Hohlteile in diesem Kreuzungsbereich auftritt.

Die Aufgabe wird erfindungsgemäß durch die Lehre der Patentansprüche 1 und 8 gelöst.

Durch die erfindungsgemäße Ausformung des Kreuzungsbereichs der jeweiligen Hohlteile kann nun eine raumsparende Verbindung zwischen zwei sich kreuzenden Hohlteilen erziert werden, die außer der durch den hohlen Körper bewirkten Gewichtsverminderung auch eine raumsparende Geometrie bei geringfügiger Schwächung der Hohlteile erzielt.

Die Verbindung der Hohlteile kann lösbar erfolgen, bspw. mittels einer oder mehrerer Schrauben im Bereich der übereinanderliegenden Hohlteile.

In anderen Fällen kann es günstig sein, wenn die Verbindung durch Schweißen oder Kleben erfolgt.

Es ist auch möglich, daß die Hohlteile mehrschichtig sind, wobei die Schichten aus gleichem oder unterschiedlichem Material bestehen. Eine derartige Verwendung von umformbarem Schichtmaterial für die Hohlteile kann sinnvoll sein, wenn aufgrund der Umgebung verschiedene Materialeigenschaften im Hohlrauminneren und im Hohlraumäußeren verlangt werden. Der Schichtaufbau ist auch aufgrund verschlechterter Schwinungsleitfähigkeit in Fällen, in denen Vibrationen der Hohlteile unterdrückt werden sollen, besonders vorteilhaft.

Bevorzugt ist mindestens eine Hohlteilwand oder Hohlteilwandschicht aus Metall, bevorzugt Stahl, und kann - bei reinem Stahl als Hohlteilmaterial, bei einer bevorzugten Ausführungsform eine Dicke von etwa 1 mm bis zu etwa 10 mm besitzen.

Es kann aber auch sinnvoll sein, daß mindestens eine Hohlteilschicht aus Kunststoff, Glas oder Keramik ist.

Das Innenhochdruckumformverfahren ist beispielsweise in "Metallumformtechnik", Ausgabe 1 D/91, Seiten 15 ff., A. Ebbinghaus: "Präzisionswerkstück in Leichtbauweise, hergestellt durch Innenhochdruck-Umformen" oder auch in "Werkstatt und Betrieb", Seite 241 - 242, A. Ebbinghaus "Wirtschaftliches Konstruieren mit innenhochdruckumgeformten Präzisionswerkstücken" oder auch in "Werkstatt und Betrieb" 122 (1889) 11, S. 933 - 938 Ebbinghaus A., Pischel, H.: "Gesenkschmiede mit neuer Technologie" beschrieben. Dieses Verfahren ermöglicht es, durch die Anwendung von unter hohem Druck, bis 20000 bar stehenden Fluids im Hohlteilinneren, Hohlteile, insbesondere Stahlhohlteile mit größeren Wandstärken gegen eine Außenform so umzuformen, daß bei Nachführen von Material in Richtung der Rohrachse während des Umformens eine Schwächung der Wandstärken des zu formenden Teils vermieden wird, und auch, mehrschichtige Hohlkörper herzustellen und umzuformen, so daß eine mehrschichtige Wand, in der alle Wandschichten im wesentlichen parallel zueinander verlaufen und fest aufeinanderliegen, erzielt wird.

Zur Vermeidung einer Schwächung der umgeformten Hohlteile ist es bevorzugt, die Hohlteile beim Innenhochdruckumformen unter Nachführen des Hohlteilmaterials in Hohlteilachsenrichtung derart, daß die Wandstärke der Hohlteile im wesentlichen auch nach dem Umformen konstant bleibt, umzuformen.

Nachfolgend soll die Erfindung detaillierter anhand der begleitenden Zeichnung erläutert werden, die in schematischer, nicht maßstabsgetreuer Darstellung zeigt:
- Fig.1: ein Hohlteil der erfindungsgemäßen Verbindung, bei dem der umgeformte Bereich mit der Fügefläche deutlich zu erkennen ist;
- Fig. 2: einen Längsschnitt durch das Hohlteil der Fig. 1;
- Fig. 3: eine erfindungsgemäße Verbindung zweier Hohlteile in perspektivischer Darstellung;
- Fig. 4: einen Schnitt durch eine erfindungsgemäße Verbindung;
- Fig. 5: einen Querschnitt entlang der Linie B-B durch ein rundes Hohlteil der Verbindung in Fig. 4
- Fig. 6: einen Querschnitt entlang der Linie C-C im umgeformten Bereich in der Nähe der Fügefläche der Fig. 4;
- Fig. 7: einen Querschnitt durch die beiden übereinanderliegenden umgeformten Hohlteile im Verbindungsbereich;

### Querschnitt.

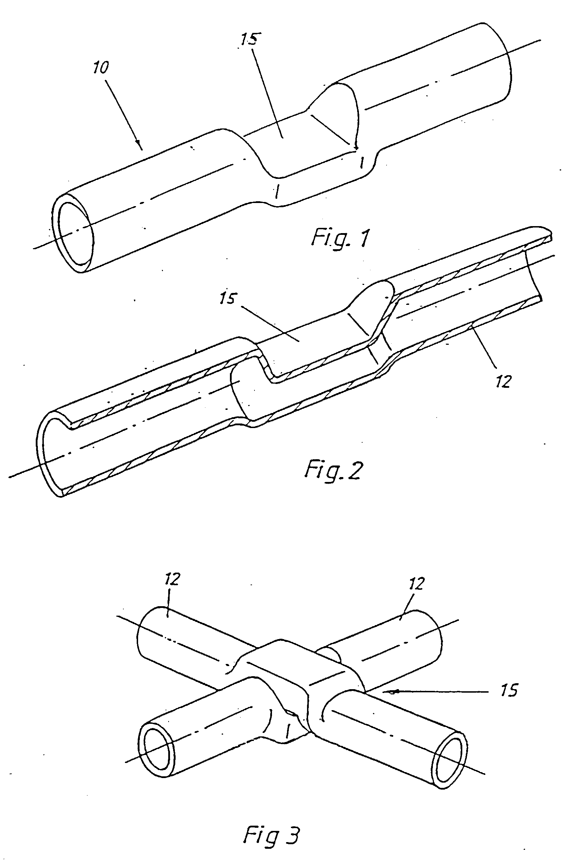

Wie in Fig.1 in perspektivischer Darstellung gezeigt, besitzt ein erfindungsgemäß an eine Verbindung angepaßtes Hohlteil 12 hier einen runden Querschnitt, der hier in etwa in der Mitte des Hohlteils 12 durch Einformen eines zurückgesetzten Flächenbereichs als Fügefläche 15 zu einem in etwa rechteckigen Querschnitt umgeformt ist, wie er in Fig. 7 dargestellt ist. Deutlich ergibt sich aus dem in Fig. 2 gezeigten Längsschnitt durch ein erfindungsgemäß umgeformtes Hohlteil 12, das Bestandteil der Verbindung ist, daß die Fügefläche 15 ausreichend tief eingeformt ist, um eine im wesentlichen flache Verbindung oder Kreuzung der beiden Hohlteile 12, 12' zu ermöglichen.

Bei der hier in den Fig. 1 bis 3 dargestellten Ausführungsform sind mehrschichtige Hohlteile eingesetzt worden.

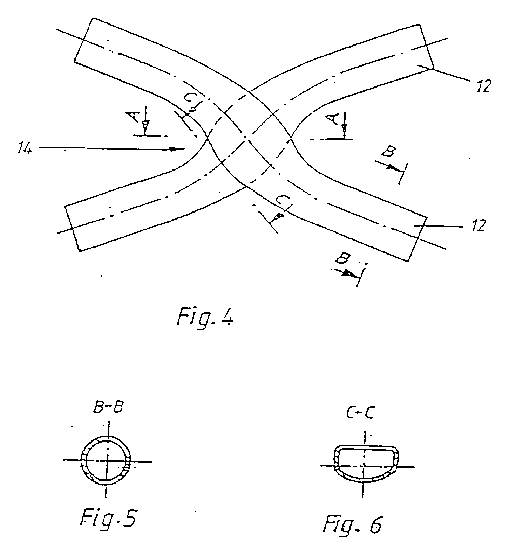

In der Fig. 4 ist nun ein Schnitt durch die Verbindung in Verbindungsebene zwischen zwei Hohlteilen 12 und 12' dargestellt, wobei verschiedene Querschnitte durch die diese Verbindung bildenden Hohlteile in den nachfolgenden Figuren gezeigt sind.

Aus Fig. 5 ist ersichtlich, daß die hier verwendeten Hohlteile ursprünglich Rohre mit kreisrundem Querschnitt waren, wie sich aus dem Schnitt entlang der Linie B-B der Fig. 4 ersehen läßt. In der Nähe des Kreuzungsbereichs sind die Hohlteile nun bereits der beginnenden Umformung für den Kreuzungsbereich unterworfen, wie sich aus Fig. 6 ergibt. Dort ist ein Querschnitt eines Übergangsbereiches eines Hohlteils 12 im Bereich zwischen den Schnitten A-A und B-B der Fig. 4, gezeigt. In Fig. 7 sind nun die Umformungen im Kreuzungsbereich selbst dargestellt, die hier zu einem fast rechteckigen Querschnitt der beiden Hohlteile 12, 12' mit den Fügeflächen 15 führen.

## Patentansprüche

1. Träger in leichten Landfahrzeugen mit zwei mittels des Innenhochdruck-Umformverfahrens hergestellten runden kaltverformten Hohlteilen (12, 12') die sich unter vorherbestimmtem Winkel kreuzen, wobei mindestens eine Hohlteilwand oder eine Hohlteilwandschicht aus Metall ist, wobei ferner im Kontaktbereich der beiden Hohlteile formschlüssig zueinanderpassende, Fügeflachen geformt sind und die Hohlteile an ihren Fügeflächen aneinander befestigt sind und wobei die Hohlteile im Kontaktbereich zueinander symmetrisch und im wesentlichen rechteckig sind.

2. Verbindung nach Anspruch 1, dadurch gekennzeichnet, daß die Verbindung der Hohlteile (12, 12') lösbar ist.

3. Verbindung nach Anspruch 2, dadurch gekennzeichnet, daß die Verbindung (14) mittels einer oder mehrerer Schrauben im Bereich der übereinanderliegenden Hohlteile (12, 12') erfolgt.

4. Verbindung nach Anspruch 1 dadurch gekennzeichnet, daß die Verbindung (14) zwischen den Hohlteilen (12, 12') durch Schweißen oder Kleben erfolgt.

5. Verbindung nach einem der vorangehenden Ansprüche, dadurch gekennzeichnet, daß die Hohlteile (12, 12') mehrschichtig sind, wobei die Schichten aus gleichem oder unterschiedlichem Material bestehen.

6. Verbindung nach einem der vorangehenden Ansprüche, dadurch gekennzeichnet, daß mindestens eine Hohlteilwand oder Hohlteilwandschicht aus Stahl, ist.

7. Verbindung nach Anspruch 5, dadurch gekennzeichnet, daß mindestens eine Hohlteilschicht aus Kunststoff, Glas oder Keramik ist.

8. Verfahren zur Herstellung von Trägern in leichten Landfahrzeugen mit zwei miteinander verbundenen Hohlteilen nach irgendeinem der vorangehenden Ansprüche mit den Schritten:
- Umformen der Hohlteile durch das Innenhochdruckumformverfahren in mindestens einem Bereich zu einem Fügeprofil, wobei die Hohlteile beim Innenhochdruckumformen unter Nachführen des Hohlteilmaterials in Hohlteilachsenrichtung derart, daß die Wandstärke der Hohlteile im wesentlichen auch nach dem Umformen konstant bleibt, umgeformt werden und die Fügeprofile der miteinander zu verbindenden Hohlteile so ausgebildet werden, daß sie formschlüssig an den Fügeflächen bei der Verbindung aufeinanderpassen;
- Aufeinanderlegen der Hohlteile derart, daß die Fügeflächen zumindest teilweise aufeinanderliegen und
- Verbinden der beiden Hohlteile an den Fügeflächen.

9. Verfahren nach Anspruch 8, dadurch gekennzeichnet, daß das Verbinden der beiden Hohlteile im Bereich der Fügeflächen durch Verkleben der Fügeflächen oder durch Verschweißen oder durch Verschrauben erfolgt.

## Claims

1. Support in light land vehicles, having two round cold-worked hollow parts (12, 12') which are produced by the internal-high-pressure deformation process and cross one another at a predetermined angle, it being the case that at least one hollow-part wall or one hollow-part-wall layer is made of metal, it also being the case that formed in the contact region of the two hollow parts are joining surfaces which match one another with a form fit, and the hollow parts are fastened on one another at their joining surfaces, and it being the case that, in the contact region, the hollow parts are symmetrical to one another and essentially rectangular.

2. Connection according to Claim 1, characterized in that the connection of the hollow parts (12, 12') is releasable.

3. Connection according to Claim 2, characterized in that the connection (14) takes place by means of one or more screws in the region of the hollow parts (12, 12') located one above the other.

4. Connection according to Claim 1, characterized in that the connection (14) between the hollow parts (12, 12') takes place by welding or adhesive bonding.

5. Connection according to one of the preceding claims, characterized in that the hollow parts (12, 12') are multi-layered, the layers consisting of the same material or different materials.

6. Connection according to one of the preceding claims, characterized in that at least one hollow-part-wall or hollow-pad-wall layer is made of steel.

7. Connection according to Claim 5, characterized in that at least one hollow-part layer is made of plastic, glass or ceramic material.

8. Process for producing supports in light land vehicles, having two interconnected hollow parts according to any of the preceding claims, the process comprising the following steps:
- deforming the hollow parts, by the internal-high-pressure deformation process, in at least one region to give a joining profile, it being the case that the hollow parts are deformed during the internal-high-pressure deformation operation, with the hollow-part material following along in the direction of the hollow-part axis, such that the wall thickness of the hollow parts remains essentially constant even following the deformation operation, and the joining profiles of the hollow parts which are to be connected to one another are designed such that they match one another with a form fit at the joining surfaces during the connection;
- positioning the hollow parts one above the other such that the joining surfaces are located one above the other at least in part; and
- connecting the two hollow parts at the joining surfaces.

9. Process according to Claim 8, characterized in that the connection of the two hollow parts in the region of the joining surfaces takes place by adhesive bonding of the joining surfaces or by welding or by screw-connection.

## Revendications

1. Longeron de véhicules terrestres légers, constitué de deux pièces (12, 12') creuses et rondes formées par emboutissage à froid en utilisant le procédé de formage à haute pression interne, lesquelles pièces s'entrecroisent suivant un angle prédéterminé, dans lequel au moins une paroi de pièce creuse ou une couche de paroi de pièce creuse est en métal, dans lequel en outre des surfaces de jointure mécaniquement conjuguées par sûreté de forme sont formées dans la région de contact des deux pièces creuses et dans lequel les pièces creuses sont fixées l'une à l'autre au niveau de leurs surfaces de jointure, et dans lequel les pièces creuses sont symétriques et sensiblement rectangulaires dans la région de contact.

2. Raccordement selon la revendication 1, caractérisé en ce que le raccordement des pièces creuses (12, 12') est démontable.

3. Raccordement selon la revendication 2, caractérisé en ce que le raccordement (14) est effectué au moyen d'une ou de plusieurs vis dans la région des pièces creuses (12, 12') agencées l'une sur l'autre.

4. Raccordement selon la revendication 1, caractérisé en ce que le raccordement (14) des pièces creuses (12, 12') est effectué par soudage ou collage.

5. Raccordement selon l'une des revendications précédentes, caractérisé en ce que les pièces creuses (12, 12') comportent plusieurs couches, les couches étant constituées de la même matière ou de matières différentes.

6. Raccordement selon l'une des revendications précédentes, caractérisé en ce que au moins une paroi de pièce creuse ou une couche de paroi de pièce creuse est en acier.

7. Raccordement selon la revendication 5, caractérisé en ce que au moins une couche de paroi de pièce creuse est en matière plastique, en verre ou en céramique.

8. Procédé de fabrication de longerons de véhicules terrestres légers comportant deux pièces creuses raccordées l'une à l'autre selon l'une quelconque des revendications précédentes, comportant les étapes consistant à :
- former les pièces creuses suivant le procédé d'emboutissage à haute pression interne dans au moins une région pour obtenir un profilé de jointure, les pièces creuses étant formées lors de l'emboutissage à haute pression interne en guidant ensuite la matière constitutive des pièces creuses dans le sens de l'axe des pièces creuses de façon que l'épaisseur de paroi des pièces creuses reste sensiblement constante également après l'emboutissage, et les profilés de jointure des pièces creuses à raccorder sont conformés de façon qu'ils s'ajustent mécaniquement par sûreté de forme au niveau des surfaces de jointure lors du raccordement ;
- agencer l'une sur l'autre les pièces creuses de telle façon que les surfaces de jointure soient agencées au moins partiellement l'une sur l'autre, et
- raccorder les deux pièces creuses au niveau des surfaces de jointure.

9. Procédé selon la revendication 8, caractérisé en ce que le raccordement des deux pièces creuses dans la région des surfaces de jointure est effectué par collage des surfaces de jointure, ou encore par soudage ou par vissage.
